# EUROPEAN PATENT SPECIFICATION

(11) **EP 0 445 837 B1**
(45) Date of publication and mention of the grant of the patent: **08.01.1997**
(21) Application number: 91103606.9
(22) Date of filing: 08.03.1991
(51) Int. Cl.: C08G 18/68, C08G 18/40, C08G 18/76

(54) **Crosslinkable polyester/isocyanate compositions suitable for the preparation of composite materials**
Vernetzbare Polyester/Isocyanat-Zusammensetzungen zur Herstellung von Verbundstoffen
Compositions durcissables de polyester/isocyanate pour la préparation de matériaux composites

(30) Priority: 09.03.1990 IT 4100290
(43) Date of publication of application: 11.09.1991
(73) Proprietor: SIR INDUSTRIALE S.p.A., Macherio (MI) (IT)
(72) Inventor: Credali, Lino, Dr., I-40137 Bologna (IT); Cioni, Paolo, Dr., I-28100 Novara (IT); Frisch, Kurt C., Michigan 48138 (US); Kresta, Jiri E., Warren, Michigan (US); Fu, Fushu, Detroit (US)
(74) Representative: Gervasi, Gemma, Dr.

(56) References cited:
- EP-A- 0 011 216
- EP-A- 0 020 041
- EP-A- 0 048 117
- DE-A- 2 427 089
- US-A- 4 213 837
- US-A- 4 376 833

## Description

The present invention relates to crosslinkable polymeric compositions suitable for the production of composite materials, preferably by means of "lay-up" processes.

More particularly, this invention relates to compositions which comprise two reactive systems which are capable of polymerizing independently, resulting in an interpenetrating polymer network (IPN).

In said compositions, one of the two reactive systems comprises an unsaturated polyester resin and/or vinylester resin, capable of reacting, in the presence of free radical generating initiators, with vinyl monomers, resulting in three-dimensional polymeric structures.

The second system comprises at least one polyisocyanate and at least one polyol which, in the presence of suitable catalysts, form carbamates and isocyanurates, thereby giving rise to a second three-dimensional structure which is part of the IPN. Especially when unsaturated polyester resins are employed, some grafting between the two structures may occur.

Interpenetrating polymer networks based on unsaturated polyesters and isocyanates have already been prepared and described in the literature.

US-A-4,386,166 describes foams based on modified polyesters, obtained by mixing together two reactive components containing foaming agents, one of which consists of a mixture of an unsaturated polyester, a low molecular weight polyol and catalysts for the formation of urethanes and isocyanurates, while the other component consists of a mixture of a polyisocyanate, a peroxide and a urethane catalyst.

When the components of such reactive systems are combined with each other they do not afford crosslinked (interpenetrating) products possessing a satisfactory impact strength nor can they be used in the manufacture of products by means of a "lay-up" process.

US-A-4,581,384 describes rigid foams with improved dimensional stability, obtained by the combination of two reactive systems, one of which consists of a polyol and a hydroxyl-terminated unsaturated polyester, while the second system consists of a polyisocyanate and a vinyl monomer capable of crosslinking with the polyester, the total stoichiometric NCO/OH ratio of the two systems being at the most 1.5/l.

Also in this case the combination of the two reactive systems is unsuitable for the preparation of manufactured articles with high rigidity and high impact strength, as well as for use in a "lay-up" type process.

Thus, the object of the present invention is to provide crosslinkable polymeric compositions suitable for the manufacture of composite materials and being characterized by improved impact strength properties as compared to unsaturated polyesters. Moreover, these compositions are characterized by a lower shrinkage during the crosslinking, a lower content in vinyl monomers (in particular styrene) and other volatile monomers and, at last, by better self-extinguishing properties while maintaining the other advantageous properties of the unsaturated polyesters.

The compositions of the present invention comprise the following components in admixture with each other:
(A) at least one polyisocyanate which at ambient temperature is liquid or is liquefiable by admixture of the other components and has a functionality of at least 2 and not greater than 5, preferably of from 2 to 4, and a viscosity at 25°C of from 20 to 10,000 cP, preferably of from 40 to 1,000 cP;
(B) at least one polyol with a functionality of at least 2 and not greater than 7, preferably of from 2 to 5, having an average molecular weight of at least 200 and not more than 10,000, preferably from 300 to 5,000, in a quantity such as to provide a molar ratio (NCO/OH) of isocyanate groups of component (A) to hydroxyl groups of from 2 to 8, preferably from 3 to 7;
(C) at least one vinylester and/or polyester resin, containing ethylenic unsaturations of the vinyl or vinylidene type, in a 30 to 80% by weight admixture with a vinyl or divinyl monomer, as defined further below, in such a quantity that (C) represents from 20 to 80% of the total weight of (A)+(B)+(C);
(D) at least one radical polymerization initiator, which per se is stable at temperatures below 70°C, in quantities of from 0.1 to 4% by weight, based on the total weight of (A)+(B)+(C);
(E) at least one promoter for the decomposition of initiator (D) at temperatures below 70°C, selected from salts, soluble in (C) or in the mixture of (A), (B) and (C), of transition metals, preferably Co(II) and Mn(II), in a quantity of from 0.001 to 0.5% and preferably 0.001 to 0.05% by weight, calculated on the metal, of the total weight of (A)+(B)+(C); N,N-dialkylsubstituted aromatic amines in a quantity of from 0.05 to 1% by weight; and mixtures of the above types of promoters in the amounts indicated;
(F) at least one trimerization catalyst for polyisocyanate (A) in quantities of from 0.01 to 1% by weight of the total weight of (A), (B) and (C);
(G) from 0 to 20%, preferably 4 to 10% by weight of the total weight of (A), (B) and (C) of a mineral filler exerting a dehydrating action such as, for instance, CaCO₃, zeolites, molecular sieves etc.

The polyisocyanates (A) are preferably selected from one or more of the following classes:
(I) Isocyanates of general formula: 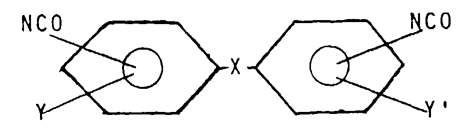 wherein:
   X = 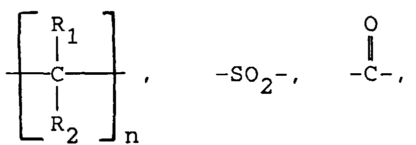 -S- or -O-;
   R₁ and R₂, the same or different from each other, represent H or C₁-C₅ alkyl (e.g. methyl, ethyl or propyl);
   n = an integer of from 0 to 4; and
   Y and Y', the same or different from each other, are H, CH₃, F, Cl or Br.
(II) Isocyanates of general formula: 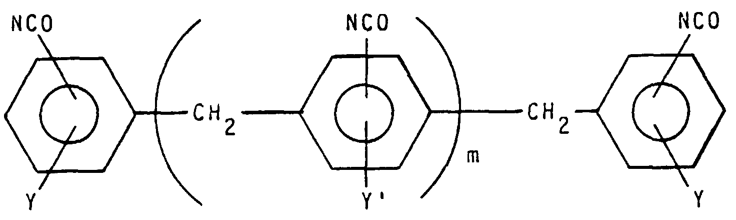 wherein:
   - Y =: H, Cl, Br, F or CH₃ (the groups Y may be the same or different from each other);
   - m =: 0, 1, 2 or 3, preferably 0, 1 or 2.

   Typical isocyanates of this class, with Y = H, are those sold under the tradename Mondur® MR (Mobay).
(III) Isocyanates of the general formula: 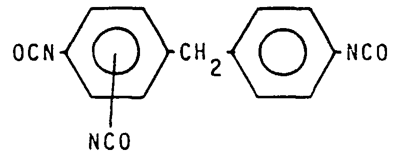
(IV) Isocyanates of the general formula: 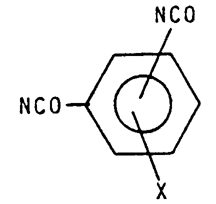 wherein:
   X = H, F, Cl, Br or CH₃,
   and the two -NCO groups are not ortho to each other.

Other examples of preferred polyisocyanates (A) are:
2,6-tolylenediisocyanate, 2,4-tolylenediisocyanate, 1,4-naphthalenediisocyanate, 1,5-naphthalenediisocyanate, 1,6-naphthalenediisocyanate, 2,6-naphthalenediisocyanate, tris(isocyanatophenyl)methane, cyclohexanediisocyanate, methylene-bis-(4-cyclohexyldiisocyanate) and blends thereof;
MDI (methylene diphenyl diisocyanate), optionally modified with carbodiimide; an isocyanate of this type is known as Isonate® 143L (Dow); and
the quasi-prepolymers obtained by condensation of the polyisocyanates mentioned above with the above polyols (B).

The polyisocyanates of class (II) are the most preferred ones. Examples of suitable polyols (B) are those obtained by the reaction of:
a) diphenols of the general formula: 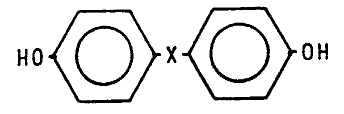 wherein:
   X is 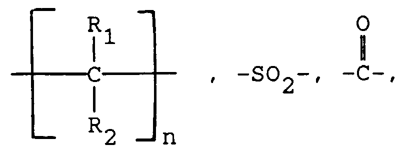 -S- or -O-;
   R₁ and R₂, the same or different from each other, represent H, CH₃ or C₂H₅,
   n = a number of from 1 to 4, extremes included;
b) bisphenol A;
c) novolacs;
with alkylene oxides such as, for instance, ethylene oxide and propylene oxide, 1,2-butene oxide, epichlorohydrin, etc., and condensation products of such alkylene oxides with low molecular weight polyols, both aliphatic and aromatic, such as ethylene glycol, propylene glycol, 1,4-butanediol, glycerol, trimethylol propane, pentaerythritol, diethanolthioether, cyclohexanediol, hydroquinone, resorcinol, etc.

Examples of corresponding condensation products are poly(oxyethylene)glycol, poly(oxypropylene)glycol and bisphenol-A oxypropylate.

Other examples of suitable polyols (B) are saturated polyester polyols obtainable by the reaction of carboxylic acids such as terephthalic, isophthalic, succinic and adipic acids and mixtures thereof with glycols such as ethylene glycol, propylene glycol, bisphenol-A dihydroxyethylether, tetramethylene glycol and higher homologues thereof.

Typical polyester polyols suitable for the purposes of the present invention are products known under the tradename MULTRATHANE® (Mobay).

Last, but not least, examples of other polyols (B) employable in the compositions according to this invention are those based on hydroxy-terminated polycaprolactones. Typical examples thereof are TONE® polyols (Union Carbide) or CAPA® polyols (La Porte) and hydroxy-terminated polycarbonates which preferably contain 1,6-hexanediol- or 1,4-cyclohexanedimethanol-derived units in the polymer chain. Examples of the latter are the commercial products known under the tradename DURACARB® (PPG Industries).

The polyols derived from the condensation with alkylene oxides, in particular poly(oxypropylene)glycols, the polyester polyols and the polyetherester polyols are the most preferred polyols (B).

It is preferable that component (B) comprises a mixture of a diol with a polyol having a functionality greater than 2; however, and in particular for compositions for use in processes different from the "lay-up" process, the diol may be absent. In this latter case the NCO/OH ratio as defined above is preferably within the range of from 4 to 7.

As vinylester resins (C) all common vinylester resins may be employed, including mixtures of the neat polymer in a vinyl or divinyl monomer, and preferably having a viscosity such as to confer to the mixture of (A) + (B) + (C) a viscosity of from 100 to 400 cP at 20°C.

More particularly, the polymeric portion of such a vinylester resin may show the following general formula:

C-I-(D-N)ₜ-D-I-C

wherein:
- C =: a group derived from a hydroxy-terminated ester of acrylic, methacrylic or a similar acid;
- I =: a group derived from a polyisocyanate of the type described above, and preferably derived from methylene diphenyl diisocyanate;
- D =: a group derived from an organic diol of the type described above and preferably derived from bisphenol A or a similar compound;
- N =: a group derived from a saturated or unsaturated dicarboxylic acid or a corresponding anhydride;
- t =: a number of from 1 to 5.

Resins of the above type usable for the purposes of the present invention, as well as methods for their preparation, are described, e.g., in US-A-3,876,726; 4,213,837 and 4,182,830 and in EP-A-48,117.

Other vinylester resins suitable for the purposes of the present invention are those represented by the following general formula:

A-(D-M)ₜ-D-A

wherein:
- D and t: have the same meaning and values as given for the above vinylester resins;
- A =: a group derived from acrylic or methacrylic acid or similar acrylic compounds;
- M =: a group derived from an alkylene oxide such as, for example, ethylene oxide, propylene oxide or epichlorohydrin.

The vinyl and divinyl monomers present in such vinyl ester resins comprise vinyl esters such as vinyl acetate and alkyl acrylates and methacrylates (with the alkyl group containing from 1 to 20, but preferably from 1 to 10 carbon atoms) such as, e.g., methyl(meth)acrylate, ethyl(meth)acrylate, n- and isopropyl(meth)acrylate, n-, iso- and tert.-butyl(meth)acrylate, as well as (preferably C₁-C₁₀) aryl-, (preferably C₇-C₁₂) aralkyl-,(preferably C₇-C₁₂) alkaryl-and (preferably C₃-C₈) cycloalkyl acrylates and the corresponding methacrylates.

Such vinyl monomers may, moreover, comprise aromatic vinyl compounds such as styrene and its alkyl derivatives (e.g. α-methylstyrene and vinyltoluene) as well as vinyl nitriles such as acrylonitrile and its derivatives (e.g. methacrylonitrile).

Examples of suitable divinyl monomers are alkylene glycol dimethacrylate, divinylbenzene and diallylphthalate.

The unsaturated polyester resins (C) comprise polyesters in admixture with vinyl or divinyl monomers. The polymeric portion thereof (polyester) derives from the esterification of dicarboxylic acids and/or their anhydrides with glycols of various types, provided that at least a part of the dicarboxylic acid(s) and/or the glycol(s) contains unsaturation of the ethylenic (olefinic) type.

Examples of such products include resins formed by esterification of maleic, fumaric, itaconic acids or mixtures thereof, optionally in combination with saturated aromatic or aliphatic dicarboxylic acids such as phthalic,isophthalic and terephthalic acids and the corresponding anhydrides, with ethylene-, propylene-, diethylene- and/or dipropylene-glycol and, optionally, with 1,4-butane diol.

Preferably there are used polyesters derived from the esterification of maleic and/or fumaric and/or isophthalic acids with ethylene glycol or mixtures of glycols.

The vinyl or divinyl monomers present in the unsaturated polyesters which form component (C) are substantially the same as those which have been described above for the vinylester resins.

Examples of suitable radical polymerization initiators (component (D)) are the organic peroxides such as, e.g., the alkyl esters of percarboxylic acids in which the alkyl group contains from 1 to 20, and preferably 1 to 5 carbon atoms (such as tert-butyl, n-butyl and tert-amyl); cumene hydroperoxide, ethylbenzene hydroperoxide, dicumylperoxide, di-tert-butylperoxide, hydrogen peroxide and, moreover, the azo-compounds such as, for instance, azobis(isobutyronitrile) and 2,2'-azobis-(2,4-dimethylvaleronitrile).

Particularly preferred initiators are tert-butyl and tert-amyl perbenzoate and peracetate and dibutyl diperoxyphthalate.

Suitable initiator decomposition promoters (component (E)) are, e.g., the organic salts or transition metals such as Mn(II), Co(II) and copper, said salts being soluble in resin (C). Specific examples therof are the acetylacetonates, carboxylates and alkanoates and particularly the naphthenates, octanoates, hexanoates and decanoates of said metals. Said salts are preferably used in the form of a solution in plasticizers or in fluids which are reactive with at least one of the above described components (A) and (C) such as, for instance, a glycol, an unsaturated fatty acid or its ester, etc.

Other examples of suitable decomposition promoters (E) are the aromatic tertiary amines commonly used for this purpose in radical polymerization processes such as, e.g., the dialkylanilines (e.g. diethylaniline and N-(3-ethylcyclohex-2-enyl)-aniline).

Preferred decomposition promoters in the compositions of this invention are the cobalt salts (e.g. the octanoates and neodecanoates) and diethylaniline.

As suitable trimerization catalysts (component (F)) there may be cited aliphatic tertiary amines and, particularly, aliphatic tertiary polyamines such as N,N,N',N",N"-pentamethyl diethylene triamine, N-(2-hydroxyethyl)-N,N'N'-trimethyl ethylenediamine, tetramethyl ethylenediamine; aminoalkyltriazines such as 2,4,6-tris(dimethylaminopropyl)triazine; carboxylates of quaternary ammonium salts such as, for example, N,N,N-trimethyl-N-(2-hydroxy)propylammonium-2-ethylhexanoate;carboxylates of metals of groups I and II and of transition metals such as potassium octanoate, potassium 2-ethylhexanoate, lead acetate and lead stearate; catalysts prepared "in situ" from tertiary amines and epoxy or aziridine derivatives (epoxy resins, phenyl glycidyl ether), and, moreover, aminoalkylphenols such as 2,4,6-tris(dimethylaminomethyl)phenol, 2,6-bis(dimethylaminomethyl)phenol as well as 1,3-diazabicyclo(4.5.0)undec-2,3-ene and 1,3-diazabicyclo(3.4.0)non-2-ene and combinations thereof.

Particularly suited for the present purpose are the trimerization catalysts containing N,N'-dialkyl derivatives of glycine salts of alkali metals such as, for example, sodium N-(2-hydroxy-5-nonylphenyl)methyl-N-methylglycinate (whose preparation is described in US-A-3,896,052), either as such or in admixture with the trimerization catalysts mentioned above.

The compositions according to this invention show pot lives suitable for application in several processes based on thermosetting resins and can provide, preferably for "lay-up" processes, pot lives longer than 30 min. at 25°C; in addition they are capable of hardening essentially completely at room temperature.

Said compositions make it possible to obtain, after crosslinking, thermosetting resins possessing improved impact strength and exhibiting a lower shrinkage rate with respect to the unsaturated vinylester and polyester resins of the prior art and, moreover, better self-estinguishing properties without affecting the other mechanical properties possessed by said resins.

Additionally, said compositions offer the advantage of a low content in styrene and other volatile products with respect to that of said unsaturated polyesters and vinylesters.

They are suited for the preparation of manufactured articles through methods of the RTM (Resin Transfer Molding) type, and especially for the manufacture of composite materials by means of "lay-up" processes.

For such applications compositions having a viscosity at 20°C of from 400 to 3000 cP are particularly suited. Said viscosity values may be attained by means of a suitable selection or choice of the type of isocyanate, of polyol and/or of the quantity of vinyl monomer present in component (C), according to selection criteria known to the person skilled in the art.

The compositions of the present invention may be used for preparing composite materials by conventional processes known in the art such as "lay-up", pultrusion, filament winding, RTM etc., using for this purpose organic or inorganic fibers such as polyamide, aramide, carbon, silicon carbide, glass etc., in the form of continuous fibers or of staples, of fabrics, mats, layers or randomly arranged.

In general, the compositions according to the present invention allow to obtain thermosetting resins having an impact strength (measured without notch) greater than 100 J/m, a bending module of at least 20,000 kg/cm², a deformation at break under bending greater than 2% and a shrinkage rate during crosslinking below 8%, preferably below 4%.

The HDT (heat distortion temperature) values of the resins in general are greater than 80°C, but preferably greater than 100°C.

Preferred components (C) of the present compositions are the vinylester resins.

Examples of preferred compositions according to this invention are those in which the polyol (component (B)) comprises a polypropylene glycol and/or a polyester polyol of an average molecular weight of from 300 to 4,000, having a functionality of from 2 to 4, extremes included, and in which the molar ratio NCO/OH preferably ranges from 3 to 7.

Further preferred compositions are those of the above type in which the isocyanate comprises an optionally carbodiimide-modified polymeric MDI which preferably shows a functionality of from 2 to 3.

The compositions of the present invention may be prepared by a simple and simultaneous mixing of all of the components (A) to (G), as illustrated above.

However, in order to avoid premature crosslinking reactions of the composition, it is advisable to maintain the components suitably separated from each other and to mix them together just at the moment at which it is intended to effect, within a short time, the crosslinking of the composition and the preparation of the manufactured article. Preferably the above components are grouped into two batches, the first of which consists of components (B), (C), (E) and (F), while the second one consists of components (A) and (D).

The mineral charge or filler (G), if used, may be present in the first or in the second batch.

The crosslinking of the composition is preferably carried out within a temperature range of from 10 to 150°C.

The preferred conditions depend, at any rate, on the type of application.

More particularly, for the preparation of composites according to the "lay-up" method, crosslinking is preferably effected at temperatures of from 10 to 60°C, while in the resin transfer molding (RTM) the temperature may even reach up to 150°C, with a lower limit of 10°C. Operating under such preferred conditions apparently implies a particular selection of the catalytic crosslinking system.

Preferred catalytic systems are, for instance, those comprising the following combinations of compounds, the quantities of which are expressed in percent by weight based on the total weight of the composition.
1.
   a) 0.5 to 3% by weight of a peroxy-compound selected from tert-butylperbenzoate, tert-amylperbenzoate, tert-butylperacetate, di-n-butyl-diperphthalate, or a combination of said peroxy-compounds in a total quantity of 0.5 to 3% by weight;
   b) 0.01 to 0.15% by weight of cobalt(II) 2-ethylhexanoate;
   c) 0.005 to 0.05% by weight of 2-hydroxypropyl trimethylammonium 2-ethylhexanoate;
   d) 0.1 to 0.8% by weight of 2,4,6-tris(dimethylaminomethyl)phenol.
2.
   a) 0.5 to 3% by weight of a peroxy-compound as specified above under 1.a);
   b) 0.02 to 0.2% by weight of cobalt(II) neodecanoate;
   c) 0.05 to 0.4% by weight of the compound specified under 1.c) above;
   d) 0.1 to 0.8% by weight of the compound specified under 1.d) above.
3.
   a) 0.5 to 3% by weight of at least one peroxy-compound as specified above under 1.a);
   b) 0.01 to 0.2% by weight of cobalt salt as defined under 1.b) and 2.b) above;
   c) 0.05 to 0.4% by weight of the compound specified under 1.c) above;
   d) 0.1 to 0.8% by weight of the compound specified under 1.d) above;
   e) 0.1 to 1% by weight of a 50% solution in diethylene glycol of sodium N-(2-hydroxy-5-nonylphenyl)methyl-N-methylglycinate (trimerization catalyst (F1)).
4.
   a) 0.5 to 3% by weight of peroxy-compound as specified under 1.a) above;
   b) 0.01 to 0.2% by weight of promoter as specified under 3.b) above;
   c) 0.1 to 0.8% by weight of the compound specified under 1.d) above;
   d) 0.1 to 1% by weight of a mixture of the trimerization catalyst (F1), as defined under 3.e), with potassium acetate and ethoxylated cocoamine (trimerization catalyst (F2)).

The components of the above catalytic systems may be used either as such or, if it is desired to facilitate the dispersion in the resin, in the form of a solution in reactive solvents such as, for instance, diols, or in not reactive media such as plasticizers.

The following examples are given for illustrating the present invention only, without limiting in any way the scope thereof.

In all examples the products obtained after crosslinking of the compositions described therein were characterized by the following measurements conducted according to the methods shown below.
- MEF: Modulus of elasticity under bending according to ASTM D 790;
- CRF: Breaking load under bending according to ASTM D 790;
- DRF: Deformation at break under bending according to ASTM D 790;
- CRT: Breaking load under tension according to ASTM D 636;
- E1.Break: Elongation at break under tension according to ASTM D 636;
- IRN: Impact resistance (notched) according to ASTM D 256;
- IRU: Impact resistance (unnotched) acording to ASTM D 256.

In the following there are given the chemical compositions of the products mentioned in the examples under their respective commercial names.
- Atlac 580-05®: vinylester resin (Reichold Resins Co.)
- Co-octoate®: 2-ethylhexanoate, 10 to 15% solution in a plasticizer (Mooney Co.);
- Co-polycure-A+®: a Co(II) salt in a plasticizer; (Mooney Co.);
- DABCO TMR®: 2-hydroxypropyl trimethylammonium 2-ethylhexanoate as 50% by weight solution in dipropylene glycol (Air Products Co.);
- Co-Hydroxy Ten-Cem®: basic Co(II) neodecanoate as 21% by weight solution in hydroxylated plasticizer (Mooney Co.);
- Mondur MR®: polymeric MDI (functionality = 2.7; isocyanate equivalent = 133; Mobay);
- Pluracol TP-440®: trifunctional polypropylene glycol based on trimethylolpropane (molecular weight = 425; BASF);
- Pluracol 2010®: dihydroxy-terminated polypropylene glycol (molecular weight = 2000; BASF);
- Baylith-L®: 50% by weight zeolite powder dispersed in castor oil (Mobay);
- Isonate 143®: carbodiimide-modified MDI, (functionality = 2.1 to 2.2; isocyanate equivalent weight = 143; Dow Chem. Co.);
- DABCO TMR-30®: 2,4,6-tris(N,N-dimethylaminomethyl)-phenol (Air Products Co.).

In the following examples 1 to 19 there are described polymerizable compositions with a high impact resistance, all of them being characterized by their capability to crosslink at room temperature and by gel times greater than 60 minutes at said temperature.

These polyisocyanate containing compositions thus are particularly useful for the manufacture of composites with glass fibers by means of "lay-up" methods.

### EXAMPLE 1

Into a 250 ml cylindrical polypropylene container equipped with a lid there were introduced in rapid sucession 50 grams of Atlac 585-05® vinylester resin, already diluted at 47% by weight with styrene and having a specific weight of 1.05, an acid number of 4 and a viscosity at 25°C of 400 cP; 13.9 g of Pluracol 2010®, 6.0 g of Pluracol TP-440®, 0.25 g of DABCO-TMR® (trimerization catalyst for isocyanate), 0.25 g of DABCO-TMR-30® (trimerization co-catalyst) , 2.5 g of tert-butyl-perbenzoate, 0.25 g of Co-Hydroxy Ten-Cem® and 30.1 g of polymeric MDI (Mondur MR®).

Said components were rapidly mixed together and the resulting mixture was then degassed under vacuum (1 mmHg) for 3 minutes so as to remove the air bubbles present in the resulting suspension.

60 g of the mixture were then rapidly poured into a Teflon® lined mold (15 cm x 15 cm x 2 mm), taking care to ensure that the exposure of the liquid surface to the air be as short as possible in order to avoid secondary reactions with the humidity of the air. The remaining 40 g were used for the determination of the gel time.

The composition was then allowed to crosslink in the mold for at least 10 hours at room temperature (18 to 25°C). The crosslinked product removed from the mold was then allowed to stand for 15 to 20 days without any particular protection, thus completing the hardening. The samples thus obtained were used for measuring the mechanical properties and the obtained results are reported in Table 1, together with those of examples 2 and 3.

### EXAMPLES 2 AND 3

Two compositions were prepared and characterized in the same way as that described in example 1, but with the components and the quantities reported in Table 1 (columns 2 and 3) together with the respective gel times and the mechanical properties of each composition after crosslinking.

### EXAMPLES 4 TO 6

Three formulations were prepared and characterized in the same way as those described in examples 1 to 3, but with the components and quantities reported in Table 2, together with the respective gel times and the mechanical properties of each composition after hardening.

In examples 4 to 6 there was used a combination of three isocyanate trimerization catalysts, in which combination the presence of trimerization catalyst F1 unexpectedly allowed to attain gel times for the hybrid resin longer than those obtained only with DABCO-TMR® and DABCO-TMR-30® catalysts used in the quantity reported in Table 2. At the same time there was observed a greater completeness in the crosslinking of the samples.

### EXAMPLES 7 TO 12

In this case six compositions were prepared and characterized in a way analogous to that described in example 1, but with the components and quantities described in Table 3, together with the respective gel times and the mechanical properties of each composition after hardening.

In compositions 7 to 12 the ratio of vinylester (VE) resin and urethane-isocyanurate (PUI = sum of the weights of polyols and polyisocyanate) was varied while the NCO/OH ratio was kept constant.

The corresponding results clearly show that the mechanical properties of the compositions after the crosslinking reach a maximum value for the VE/PUI ratios from 2.3 to 1.0 and that in each case the impact strength is increased with respect to the value that characterizes a composition based on pure vinylester resin, as reported in comparative Example A.

### COMPARATIVE EXAMPLE A

A composition was prepared and characterized in a way analogous to that of example 1, said composition containing 100 g of Atlac 580-05® vinylester resin, 2.5 g of tert-butylperbenzoate and 1 gram of Co-Hydroxy Ten-Cem®. Neither polyol nor any polyisocyanate were present in this composition. The mixture turned out to have a gel time of 120 minutes, a MEF of 29360 kg/cm² , a CRF of 1065 kg/cm², a CRT of 444 kg/cm², a deformation at break under bending of 3.3% and an impact strength (without notch) of 68 J/m.

When comparing this example with the preceding ones, there is seen a strong increase of the impact strength for all the hybrid compositions containing isocyanate without any substantial impairment of any of the other properties.

### EXAMPLE 13

A formulation was prepared in a way analogous to that described in example 1, but consisting of 50 grams of Atlac 580-05® vinylester, already diluted at 47% by weight with styrene and having a specific weight of 1.05, an acid number of 4 and a viscosity at 25°C equal to 400 cP; 9.44 g of Pluracol 2010®, 4.06 g of Pluracol TP-440®, 0.024 g of an isocyanate trimerization catalyst (DABCO-TMR®), 0.23 g of a trimerization co-catalyst (DABCO TMR-30®), 2.5 g of tert-butylperbenzoate, 0.25 g of Co-octoate®, 4 grams of a paste consisting of finely powdered zeolite dispersed in castor oil (Baylith-L®; Mobay) and 26.5 g of polymeric MDI (Mondur-MR®).

60 grams of said composition were then poured into a mold analogous to that described in example 1, and the remainder was used for measuring the gel time.

This mixture was then allowed to harden for at least 10 hours in the mold and was then allowed to stand for a period of from 15 to 20 days at room temperature.

The samples thus obtained were then used for measuring the mechanical properties and the obtained results are shown in Table 4 together with the data relating to examples 14 to 19.

Although during and throughout the process described in this example, including the mixing of the components, the contact of the resin with the humidity of the air was not prevented, no formation of surface films or bubbles was observed on the sample.

### EXAMPLES 14 TO 19

Six compositions were prepared and characterized according to the procedure of example 13, but using the components and quantities described, together with the results of the characterization, in Table 4.

The presence of zeolite powder in the formulations of examples 13 to 19 prevented the formation of films and bubbles on the surface when a film of each composition was left in the air until having reached the gel point.

In contrast thereto, similar compositions, but without zeolite powder, resulted in the formation of surface films and bubbles when treated under the same conditions.

### EXAMPLES 20 to 22

Three compositions were prepared and characterized in the same way as described in examples 1 to 3, but with the components and the quantities reported in Table 5, together with the respective gel times and the mechanical properties of each composition after crosslinking.

In examples 20 to 22, no diol of an average molecular weight ≥800 was used (in contrast to examples 1 to 19). In examples 20 and 21, where a low NCO/OH ratio was used, there were obtained compositions suitable for the manufacture of composites by processes other than the lay-up method because of their relatively short gel times. In contrast thereto, the composition described in example 22 is characterized by a much higher NCO/OH ratio and shows a gel time long enough to allow its use in lay-up processes.

In all three cases the mechanical properties of the product after crosslinking were better than those shown by a pure vinylester resin, in agreement with the aim of the present invention.

### EXAMPLE 23

Into a 250 ml cylindrical polypropylene container equipped with a lid there were introduced in fast succession 50 grams of Atlac 580-05® vinylester resin, already diluted at 47% by weight with styrene and having a specific weight equal to 1.05, an acid number of 4 and a viscosity at 25°C of 400 cP; 7.6 g of Pluracol 2010®, 5.1 g of a triol (Pluracol TP-440 ®), 0.2 g of DABCO-TMR® (isocyanate trimerization catalyst), 1.8 g of DABCO TMR-30® (trimerization co-catalyst), 2.5 g of tert-butylperbenzoate, 1 g of Co-octoate® and 37.3 g of carbodiimide-modified MDI (ISONATE 143-L®).

The components were rapidly mixed together and the mixture was then degassed under vacuum (1 mmHg) for 3 minutes, so as to eliminate any air bubbles.

One part of the mixture was then poured into the mold described in example 1 and caused to crosslink by heating at 60°C for at least 5 hours.

The remaining part of the mixture was used for measuring the gel time at 20°C, which in this case amounted to 15 minutes. The sample obtained from the mold was then cut to obtain the test pieces for the mechanical characterization. The obtained results are recorded in Table 6.

### EXAMPLES 24 TO 27

Said examples relate to the preparation and characterization of four additional formulations made by the method described in example 23. All four formulations contained the catalysts in the proportions described in example 23, while the amounts of the other components are given in Table 6. In said table there are also shown the results of the characterization of the samples obtained from each composition.

Examples 23 to 27 relate to formulations characterized by gel times of from 10 to 20 minutes at 25°C. Said formulations, although being of minor interest for use in lay-up processes, allow to obtain products of increased impact strength when compared with the properties of the sample of pure vinylester whose preparation is reported, for comparative purposes, in comparative example B.

### COMPARATIVE EXAMPLE B

Into the cylindrical container described in example 23, there were introduced 100 g of Atlac 580-05® vinylester resin, 2.5 g of tert-butyl perbenzoate, 1 g of Co-octoate® and 0.3 g of diethylaniline. The resulting mixture was then caused to crosslink and the resulting product was characterized as described in example 23. The results of the mechanical tests are shown in the last column of Table 6.

**TABLE 1**

| EXAMPLES | 1 | 2 | 3 |
|---|---|---|---|
| COMPOSITION (GRAMS) | | | |
| ATLAC 580-05® | 50 | 50 | 50 |
| PLURACOL 2010® | 13.9 | 12.1 | 9.1 |
| PLURACOL TP440® | 6.0 | 5.2 | 6.1 |
| MONDUR-MR® | 30.1 | 32.7 | 34.8 |
| DABCO-TMR® | 0.25 | 0.25 | 0.25 |
| DABCO-TMR-30® | 0.25 | 0.25 | 0.25 |
| Co-Hydroxy Ten-Cem® | 0.25 | 0.25 | 0.25 |
| tert-butylperbenzoate | 2.5 | 2.5 | 2.5 |

| PROPERTIES | | | |
|---|---|---|---|
| NCO/OH | 4 | 5 | 5 |
| Gel Time (minutes) | 95 | 90 | 80 |
| MEF (kg/cm²) | 29950 | 30800 | 33850 |
| CRF (kg/cm²) | 1045 | 1110 | 1110 |
| CRT (kg/cm²) | 610 | 610 | 520 |
| DRF (%) | 4.4 | 4.1 | 3.6 |
| IRU (J/m) | 234 | 171 | 184 |

**TABLE 2**

| EXAMPLES | 4 | 5 | 6 |
|---|---|---|---|
| COMPOSITION (GRAMS) | | | |
| ATLAC 580-05® | 50 | 50 | 50 |
| PLURACOL 2010® | 7.9 | 10.6 | 12.1 |
| PLURACOL TP440® | 7.9 | 7.0 | 5.2 |
| MONDUR-MR® | 34.2 | 32.4 | 32.7 |
| DABCO-TMR® | 0.20 | 0.20 | 0.20 |
| DABCO-TMR-30® | 0.25 | 0.25 | 0.25 |
| Trimerization | 0.20 | 0.20 | 0.20 |
| catalyst F1 | | | |
| tert-butylperbenzoate | 2.5 | 2.5 | 2.5 |
| CoPoly-A* | 0.25 | 0.25 | 0.25 |

| PROPERTIES | | | |
|---|---|---|---|
| NCO/OH | 4 | 4 | 5 |
| Gel Time (minutes) | 65 | 90 | 90 |
| MEF (kg/cm²) | 32720 | 30150 | 26830 |
| CRF (kg/cm²) | 1000 | 1010 | 1010 |
| CRT (kg/cm²) | 460 | 610 | 620 |
| DRF (%) | 3.3 | 3.7 | 4.9 |
| IRU (J/m) | 140 | 194 | 224 |

| | | | |
|---|---|---|---|
| NOTES: * = Radical polymerization promoter Cobalt Polycure-A® (Mooney). | | | |

**TABLE 3**

| EXAMPLES | 7 | 8 | 9 | 10 | 11 | 12 |
|---|---|---|---|---|---|---|
| COMPOSITION (GRAMS) | | | | | | |
| ATLAC 580-05® | 80 | 70 | 60 | 50 | 40 | 30 |
| PLURACOL 2010® | 4.85 | 7.27 | 9.69 | 12.12 | 14.56 | 16% |
| PLURACOL TP-440® | 2.08 | 3.12 | 4.16 | 5.2 | 6.23 | 7.27 |
| MONDUR-MR® | 13.07 | 16.9 | 26.15 | 32.68 | 39.23 | 45.76 |
| DABCO-TMR-30® | 0.25 | 0.25 | 0.25 | 0.25 | 0.25 | 0.25 |
| Trimerization catalyst F2 | 0.25 | 0.25 | 0.25 | 0.25 | 0.25 | 0.25 |
| tert-butyl perbenzoate | 2.5 | 2.5 | 2.5 | 2.5 | 2.5 | 2.5 |
| Co-Hydroxy | | | | | | |
| Ten-Cem® | 0.5 | 0.25 | 0.25 | 0.25 | 0.25 | 0.25 |

| PROPERTIES | | | | | | |
|---|---|---|---|---|---|---|
| NCO/OH | 5 | 5 | 5 | 5 | 5 | 5 |
| Gel Time (minutes) | 130 | 105 | 95 | 88 | 80 | 60 |
| MEF (kg/cm²) | 30720 | 31980 | 34010 | 31750 | 27960 | 24870 |
| CFR (kg/cm²) | 1060 | 1260 | 1395 | 1285 | 1240 | 1135 |
| CRT (kg/cm²) | 692 | 810 | 720 | 770 | 690 | 695 |
| DRF (%) | 4.7 | 5.0 | 5.3 | 5.0 | 6.4 | 6.7 |
| IRU (J/m) | 82 | 367 | 299 | 362 | (708) | (923) |

**TABLE 4**

| EXAMPLES | 13 | 14 | 15 | 16 | 17 | 18 | 19 |
|---|---|---|---|---|---|---|---|
| COMPOSITION (GRAMS) | | | | | | | |
| ATLAC 580-05® | 50 | 50 | 50 | 50 | 50 | 50 | 50 |
| PLURACOL 2010® | 9.44 | 13.6 | 12.1 | 4.0 | 8.0 | 8.0 | 6.0 |
| PLURACOL TP-440® | 4.1 | 5.9 | 5.2 | 5.2 | 5.0 | 3.0 | 4.0 |
| MONDUR-MR® | 26.5 | 30.1 | 32.7 | 32.7 | 32.0 | 32.0 | 32.0 |
| DABCO-TMR® | 0.024 | 0.024 | | | | | |
| DABCO-TMR-30® | 0.23 | 0.23 | 0.25 | 0.25 | 0.25 | 0.25 | 0.25 |
| Trimerization catalyst F2 | | | 0.25 | 0.25 | 0.25 | 0.25 | 0.25 |
| Co-Hydroxy Ten-Cem® | | | 0.35 | 0.30 | 0.25 | 0.25 | 0.25 |
| tert-butyl perbenzoate | | 2.5 | 2.0 | 1.5 | 1.5 | 1.5 | 1.5 |
| (zeolite) | 4.0 | 4.0 | 8.0 | 8.0 | 8.0 | 8.0 | 8.0 |

| PROPERTIES | | | | | | | |
|---|---|---|---|---|---|---|---|
| NCO/OH (polyols)* | 5 | 4 | 5 | 6 | 5.5 | 8 | 7 |
| Gel Time (minutes) | 57 | 63 | 110 | 85 | 85 | 150 | 110 |
| MEF (kg/cm²) | 29360 | 24860 | 25300 | 32840 | 30870 | 32000 | 32700 |
| CRF (kg/cm²) | 747 | 750 | 925 | 1035 | 1165 | 1225 | 1145 |
| CRT (kg/cm²) | 539 | 407 | 590 | 665 | 725 | 610 | 710 |
| DRF (%) | 2.7 | 3.2 | 4.4 | 3.4 | 5.8 | 5.1 | 4.6 |
| IRU (J/m) | 81 | 133 | 142 | 268 | 244 | 292 | 267 |

| | | | | | | | |
|---|---|---|---|---|---|---|---|
| NOTES: * The effective NCO/OH ratio also includes the OH groups contained in the drying agent BAYLITH-L® | | | | | | | |

**TABLE 5**

| EXAMPLES | 20 | 21 | 22 |
|---|---|---|---|
| COMPOSITION (GRAMS) | | | |
| ATLAC 580-05® | 50 | 50 | 50 |
| PLURACOL TP-440® | 12.7 | 16.9 | 5.2 |
| MONDUR-MR® | 37.3 | 33.1 | 32.7 |
| DABCO-TMR® | 0.024 | 0.024 | |
| DABCO-TMR-30® | 0.23 | 0.23 | 0.25 |
| Trimerization catalyst F2 | | | 0.25 |
| tert-butylperbenzoate | 2.5 | 2.5 | 1.5 |
| Co-octoate® | 0.25 | 0.25 | |
| Co-Hydroxy Ten-Cem® | | | 0.3 |
| BAYLITH-L® (ZEOLITE) | 4.0 | 4.0 | 8.0 |

| PROPERTIES | | | |
|---|---|---|---|
| NCO/OH (polyols) | 3 | 2 | 6.7 |
| Gel Time (minutes) | 30 | 23 | 75 |
| MEF (kg/cm²) | 32410 | 29450 | 34550 |
| CRF (kg/cm²) | 915 | 961 | 1000 |
| CRT (kg/cm²) | 325 | 572 | 635 |
| DRF (%) | 3.8 | 4.9 | 3.2 |
| IRU (J/m) | 126 | 258 | 122 |

**TABLE 6**

| EXAMPLES | 23 | 24 | 25 | 26 | 27 | COMP.B |
|---|---|---|---|---|---|---|
| COMPOSITION (GRAMS) | | | | | | |
| PLURACOL 2010® | 7.6 | 11.6 | 8.7 | 6.4 | 5.8 | - |
| PLURACOL TP-440® | 5.1 | 4.9 | 5.8 | 6.5 | 5.7 | - |
| ATLAC 580-05® | 50 | 50 | 50 | 50 | 50 | 100 |
| ISONATE 143-L® | 37.3 | 33.5 | 35.5 | 37.1 | 38.5 | - |

| PROPERTIES | | | | | | |
|---|---|---|---|---|---|---|
| MEF (kg/cm²) | 30020 | 24900 | 27820 | 27300 | 31170 | 29420 |
| CRF (kg/cm²) | 1020 | 920 | 920 | 890 | 760 | 1060 |
| CRT (kg/cm²) | 540 | 560 | 600 | 460 | 470 | 490 |
| DRF (%) | 4.8 | 7.0 | 5.8 | 4.0 | 3.2 | 3.0 |
| IRN (J/m) | 43.0 | 70.3 | 44.0 | 33.8 | 27.4 | 10.7 |

## Claims (Claims for the following Contracting State(s): BE, DE, FR, GB, NL, SE)

1. Crosslinkable polymeric compositions comprising:
(A) at least one polyisocyanate having a functionality of from 2 to 5 and a viscosity at 25°C of from 20 to 10,000 cP;
(B) at least one polyol having a functionality of from 2 to 7 and an average molecular weight of from 200 to 10,000, in an amount such that the molar ratio (NCO/OH) of the isocyanate groups of component (A) to hydroxyl groups ranges from 2 to 8;
(C) at least one vinylester resin and/or unsaturated polyester resin, containing ethylenic unsaturation of the vinyl or vinylidene type, in a 30 to 80% by weight admixture with a vinyl or divinyl monomer, in an amount of 20 to 80% by weight of the sum (A)+(B)+(C);
(D) at least one radical polymerization initiator stable as such at temperatures below 70°C in an amount of 0.1 to 4% by weight based on the total weight of (A)+(B)+(C);
(E) at least one promoter for the decomposition of the initiator (D) at temperatures below 70°C, selected from salts of transition metals, preferably Co(II) and Mn(II), which are soluble in at least one of components (A), (B) and (C), in an amount of from 0.001 to 0.5% by weight, calculated on the metal, of the total weight of (A)+(B)+(C), N,N-dialkyl-substituted aromatic amines in an amount of from 0.05 to 1% by weight and mixtures thereof;
(F) at least one trimerization catalyst for polyisocyanate (A), in an amount of from 0.01 to 1% by weight based on the total weight of (A)+(B)+(C); and
(G) from 0% to 20% by weight based on the total weight of (A)+(B)+(C), of a mineral filler exerting a dehydrating action.

2. Compositions according to claim 1, wherein the polyisocyanate (A) has a functionality of from 2 to 4 and a viscosity of from 40 to 1,000 cP at 25°C; and/or is selected from polyisocyanates of the general formula: 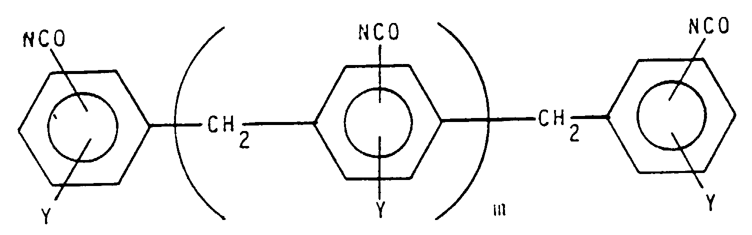 wherein:
Y = H, Cl, Br, F or CH₃; and
m = a number of from 0 to 3.

3. Compositions according to any one of claims 1 and 2, wherein polyol (B) has a functionality of from 2 to 5 and/or has an average molecular weight of from 300 to 5,000.

4. Compositions according to any one of claims 1 to 3, wherein the molar ratio NCO/OH ranges from 3 to 7.

5. Compositions according to any one of claims 1 to 4, wherein polyol (B) comprises a mixture of a diol with a polyol having a functionality greater than 2 or comprises a polypropylene glycol or polyester polyol having an average molecular weight of from 300 to 4,000 and a functionality of from 2 to 4.

6. Compositions according to any one of claims 1 to 5, wherein initiator (D) is selected from tert-butyl and tert-amyl perbenzoates and peracetates and dibutyl perphthalate.

7. Compositions according to any one of claims 1 to 6, wherein decomposition promoter (E) is selected from cobalt salts and N,N-diethylaniline.

8. Compositions according to any one of claims 1 to 7, wherein trimerization catalyst (F) is selected from aliphatic or araliphatic tertiary polyamines, quaternary ammonium salts of carboxylic acids, carboxylates of metals of groups I and II and/or transition metals which are soluble in the mixture of (A), (B) and (C), substituted glycinates of metals of groupsI and II and mixtures thereof.

9. Compositions according to any one of claims 1 to 8, which show a viscosity of from 400 to 3,000 cP at 20°C.

10. Compositions according to any one of claims 1 to 9, wherein polyisocyanate (A) comprises optionally carbodiimide-modified polymeric MDI having a functionality of from 2 to 3.

11. Compositions according to any one of claims 1 to 10, wherein polymerization initiator (D), present in quantities of from 0.5 to 3% by weight, is selected from tert-butylperbenzoate, tert-amylperbenzoate, tert-butylperacetate, di-n-butyl-di-perphthalate and mixtures thereof; and
(a) promoter (E) comprises cobalt(II) 2-ethylhexanoate in amounts of from 0.01 to 0.15% by weight; and trimerization catalyst (F) comprises 2-hydroxypropyl trimethylammonium 2-ethylhexanoate in amounts of from 0.005% to 0.05% by weight and 2,4,6-tris(dimethylaminomethyl)phenol in amounts of from 0.1% to 0.8% by weight; or
(b) promoter (E) comprises cobalt(II) neodecanoate in amounts of from 0.02 to 0.2% by weight; and trimerization catalyst (F) comprises 0.05 to 0.4% by weight of 2-hydroxypropyl trimethylammonium 2-ethylhexanoate and 0.1 to 0.8% by weight of 2,4,6-tris-(dimethylaminomethyl)phenol; or
(c) promoter (E) comprises cobalt(II) 2-ethylhexanoate and/or cobalt(II) neodecanoate in amounts of from 0.01 to 0.2% by weight; and trimerization catalyst (F) is composed of a mixture comprising 0.05 to 0.4% by weight of 2-hydroxypropyl trimethylammonium 2-ethylhexanoate, 0.1 to 0.8% by weight of 2,4,6-tris(dimethylaminomethyl)phenol and 0.1 to 1.0% by weight of a 50% solution of sodium N-(2-hydroxy-5-nonylphenyl)methyl-N-methylglycinate in diethylene glycol; or
(d) promoter (E) comprises cobalt(II) 2-ethylhexanoate and/or cobalt(II) basic-neodecanoate in amounts of from 0.01 to 0.2% by weight; and trimerization catalyst (F) is composed of 0.1 to 0.8% by weight of 2,4,6-tris(dimethylaminomethyl)phenol and 0.1 to 1.0% by weight of a mixture comprising sodium N-(2-hydroxy-5-nonylphenyl)-methyl-N-methylglycinate, potassium acetate, ethoxylated cocoamine and diethylene glycol.

12. Compositions according to any one of claims 1 to 11, wherein mineral filler (G) comprises a zeolite powder or paste, particularly in an amount of from 2 to 5% by weight based on the inorganic component.

13. Process for preparing the compositions according to claim 1, which comprises the addition of a mixture of components (B), (C), (E), (F) and, optionally, (G) to a mixture of components (A), (D) and, optionally, (G).

14. Thermosetting materials, prepared by subjecting the compositions according to any one of claims 1 to 12 to crosslinking.

15. Use of the compositions according to any one of claims 1 to 12 in the manufacture of composite materials containing organic and/or inorganic fibers.

16. Use of the compositions according to any one of claims 1 to 12 in the manufacture of composite materials by means of "lay-up", pultrusion, filament winding or RTM processes.

## Claims (Claims for the following Contracting State(s): ES)

1. Process for preparing crosslinkable polymeric compositions comprising:
(A) at least one polyisocyanate having a functionality of from 2 to 5 and a viscosity at 25°C of from 20 to 10,000 cP;
(B) at least one polyol having a functionality of from 2 to 7 and an average molecular weight of from 200 to 10,000, in an amount such that the molar ratio (NCO/OH) of the isocyanate groups of component (A) to hydroxyl groups ranges from 2 to 8;
(C) at least one vinylester resin and/or unsaturated polyester resin, containing ethylenic unsaturation of the vinyl or vinylidene type, in a 30 to 80% by weight admixture with a vinyl or divinyl monomer, in an amount of 20 to 80% by weight of the sum (A) + (B) + (C);
(D) at least one radical polymerization initiator stable as such at temperatures below 70°C in an amount of 0.1 to 4% by weight based on the total weight of (A) + (B) + (C);
(E) at least one promoter for the decomposition of the initiator (D) at temperatures below 70°C, selected from salts of transition metals, preferably Co(II) and Mn(II), which are soluble in at least one of components (A), (B) and (C), in an amount of from 0.001 to 0.5% by weight, calculated on the metal, of the total weight of (A) + (B) + (C), N,N-dialkyl-substituted aromatic amines in an amount of from 0.05 to 1% by weight and mixtures thereof;
(F) at least one trimerization catalyst for polyisocyanate (A), in an amount of from 0.01 to 1% by weight based on the total weight of (A) + (B) + (C); and
(G) from 0% to 20% by weight based on the total weight of (A) + (B) + (C), of a mineral filler exerting a dehydrating action,
which comprises the addition of a mixture of components (B), (C), (E), (F) and, optionally, (G) to a mixture of components (A), (D) and, optionally, (G).

2. Process according to claim 1, wherein the plyisocyanate (A) has a funcionality of from 2 to 4 and a viscosity of from 40 to 1,000 cP at 25°C: and/or is selected from polyisocyanates of the general formula: 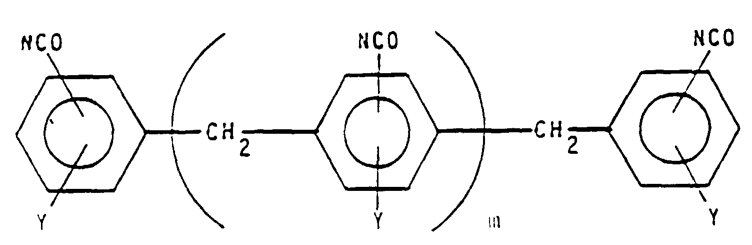 wherein:
Y = H, Cl, Br, F or CH₃; and
m = a number of from 0 to 3.

3. Process according to any one of claims 1 and 2, wherein polyol (B) has a functionality of from 2 to 5 and/or has an average molecular weight of from 300 to 5,000.

4. Process according to any one of claims 1 to 3, wherein the molar ratio NCO/0H ranges from 3 to 7.

5. Process according to any one of claims 1 to 4, wherein polyol (B) comprises a mixture of a diol with a polyol having a functionality greater than 2 or comprises a polypropylene glycol or polyester polyol having an average molecular weight of from 300 to 4,000 and a functionality of from 2 to 4.

6. Process according to any one of claims 1 to 5, wherein initiator (D) is selected from tert-butyl and tert-amyl perbenzoates and peracetates and dibutyl perphthalate.

7. Process according to any one of claims 1 to 6, wherein decomposition promoter (E) is selected from cobalt salts and N,N-diethylaniline.

8. Process according to any one of claims 1 to 7, wherein trimerization catalyst (F) is selected from aliphatic or araliphatic tertiary polyamines, quaternary ammonium salts of carboxylic acids, carboxylates of metals of groups I and II and/or transition metals which are soluble in the mixture of (A), (B) and (C), substituted glycinates of metals of groups I and II and mixtures thereof.

9. Process according to any one of claims 1 to 8, wherein said compositions show a viscosity of from 400 to 3,000 cP at 20°C.

10. Process according to any one of claims 1 to 9, wherein polyisocyanate (A) comprises optionally carbodiimide-modified polymeric MDI having a functionality of from 2 to 3.

11. Process according to any one of claims 1 to 10, wherein polymerization initiator (D), present in quantities of from 0.5 to 3% by weight, is selected from tert-butylperbenzoate, tert-amylperbenzoate, tert-butylperacetate, di-n-butyl-di-perphthalate and mixtures thereof; and
(a) promoter (E) comprises cobalt (II) 2-ethylhexanoate in amounts of from 0.01 to 0.15% by weight; and trimerization catalyst (F) comprises 2-hydroxypropyl trimethylammonium 2-ethylhexanoate in amounts of from 0.005% to 0.05% by weight and 2,4,6-tris(dimethylaminomethyl)phenol in amounts of from 0.1% to 0.8% by weight; or
(b) promoter (E) comprises cobalt(II) neodecanoate in amounts of from 0.02 to 0.2% by weight; and trimerization catalyst (F) comprises 0.05 to 0.4% by weight of 2-hydroxypropyl trimethylammonium 2-ethylhexanoate and 0.1 to 0.8% by weight of 2,4,6-tris(dimethylaminomethyl)phenol; or
(c) promoter (E) comprises cobalt(II) 2-ethylhexanoate and/or cobalt(II) neodecanoate in amounts of from 0.01 to 0.2% by weight; and trimerization catalyst (F) is composed of a mixture comprising 0.05 to 0.4% by weight of 2-hydroxypropyl trimethylammonium 2-ethylhexanoate, 0.1 to 0.8% by weight of 2,4,6-tris(dimethylaminomethyl)phenol and 0.1 to 1.0% by weight of a 50% solution of sodium N-(2-hydroxy-5-nonylphenyl)methyl-N-methylglycinate in diethylene glycol; or
(d) promoter (E) comprises cobalt(II) 2-ethylhexanoate and/or cobalt(II) basic-neodecanoate in amounts of from 0.01 to 0.2% by weight; and trimerization catalyst (F) is composed of 0.1 to 0.8% by weight of 2,4,6-tris(dimethylaminomethyl)phenol and 0.1 to 1.0% by weight of a mixture comprising sodium N-(2-hydroxy-5-nonylphenyl)-methyl-N-methylglycinate, potassium acetate, ethoxylated cocoamine and diethylene glycol.

12. Process according to any one of claims 1 to 11, wherein mineral filler (G) comprises a zeolite powder or paste, particularly in an amount of from 2 to 5% by weight based on the inorganic component.

13. A process for preparing thermosetting materials which comprises subjecting to crosslinking the compositions prepared with the process according to any one of the claims 1-12.

14. Use of the compositions according to any one of claims 1 to 12 in the manufacture of composite materials containing organic and/or inorganic fibers.

15. Use of the compositions according to any one of claims 1 to 12 in the manufacture of composite materials by means of "lay-up", pultrusion, filament winding or RTM processes.

## Patentansprüche (Patentansprüche für folgende(n) Vertragsstaat(en): BE, DE, FR, GB, NL, SE)

1. Vernetzbare Polymerzusammensetzungen, enthaltend:
(A) mindestens ein Polyisocyanat mit einer Funktionalität von 2 bis 5 und einer Viskosität bei 25°C von 20 bis 10000 cP;
(B) mindestens ein Polyol mit einer Funktionalität von 2 bis 7 und einem mittleren Molekulargewicht von 200 bis 10000 in einer solchen Menge, daß das Molverhältnis (NCO/OH) der Isocyanatgruppen der Komponente (A) zu den Hydroxylgruppen im Bereich von 2 bis 8 liegt;
(C) mindestens ein Vinylesterharz und/oder ein ungesättigtes Polyesterharz, enthaltend eine ethylenisch ungesättigte Funktion vom Vinyl- oder Vinylidentyp in einer 30 bis 80 Gew.%-Mischung mit einem Vinyl- oder Divinylmonomer, in einer Menge von 20 bis 80 Gew.% der Summe (A) + (B) + (C);
(D) mindestens einen radikalischen Polymerisationsstarter, der bei Temperaturen unterhalb 70°C stabil ist, in einer Menge von 0,1 bis 4 Gew.%, bezogen auf das Gesamtgewicht von (A) + (B) + (C);
(E) mindestens einen Promotor für den Zerfall des Starters (D) bei Temperaturen unterhalb 70°C, ausgewählt aus Salzen von Übergangsmetallen, vorzugsweise Co(II) und Mn(II), die in mindestens einer der Komponenten (A), (B) und (C) löslich sind, in einer Menge von 0,001 bis 0,5 Gew.%, berechnet als Metall des Gesamtgewichtes von (A) + (B) + (C), N,N-Dialkyl-substituierten aromatischen Aminen in einer Menge von 0,05 bis 1 Gew.% und Mischungen davon;
(F) mindestens einen Trimerisationskatalysator für Polyisocyanat (A) in einer Menge von 0,01 bis 1 Gew.%, bezogen auf das Gesamtgewicht von (A) + (B) + (C); und
(G) von 0 bis 20 Gew.%, bezogen auf das Gesamtgewicht von (A) + (B) + (C) eines mineralischen Füllstoffs, welcher eine dehydrierende Wirkung ausübt.

2. Zusammensetzungen nach Anspruch 1, worin das Polyisocyanat (A) eine Funktionalität von 2 bis 4 und eine Viskosität von 40 bis 1000 cP bei 25°C hat; und/oder ausgewählt ist aus Polyisocyanaten der allgemeinen Formel: 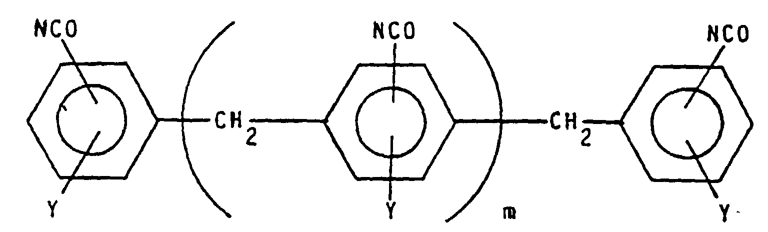 worin:
Y = H, Cl, Br, F oder CH₃; und
m = eine Zahl von 0 bis 3.

3. Zusammensetzung nach einem der Ansprüche 1 und 2, worin das Polyol (B) eine Funktionalität von 2 bis 5 hat und/oder ein mittleres Molekulargewicht von 300 bis 5000 hat.

4. Zusammensetzungen nach einem der Ansprüche 1 bis 3, worin das Molverhältnis NCO/OH im Bereich von 3 bis 7 liegt.

5. Zusammensetzungen nach einem der Ansprüche 1 bis 4, worin das Polyol (B) eine Mischung eines Diols mit einem Polyol mit einer Funktionalität von größer als 2 enthält oder ein Polypropylenglycol oder ein Polyesterpolyol mit einem mittleren Molekulargewicht von 300 bis 4000 und einer Funktionalität von 2 bis 4 enthält.

6. Zusammensetzung nach einem der Ansprüche 1 bis 5, worin der Starter (D) ausgewählt ist aus tert-Butyl und tert-Amylperbenzoaten und Peracetaten und Dibutylperphthalat.

7. Zusammensetzungen nach einem der Ansprüchen 1 bis 6, worin der Zerfallspromotor (E) ausgewählt ist aus Kobaltsalzen und N,N-Diethylanilin.

8. Zusammensetzungen nach einem der Ansprüche 1 bis 7, worin der Trimerisationskatalysator (F) ausgewählt ist aus aliphatischen oder araliphatischen tertiären Polyaminen, quaternären Ammoniumsalzen von Carbonsäuren, Carboxylaten von Metallen der Gruppen I und II und/oder Übergangsmetallen, die in der Mischung (A), (B) und (C) löslich sind, substituierten Glycinaten von Metallen der Gruppen I und II und Mischen davon.

9. Zusammensetzungen nach einem der Ansprüche 1 bis 8, welche eine Viskosität von 400 bis 3000 cP bei 20°C zeigen.

10. Zusammensetzungen nach einem der Ansprüche 1 bis 9, worin das Polyisocyanat (A) wahlweise ein Carbodiimidmodifiziertes polymeres MDI mit einer Funktionalität von 2 bis 3 enthält.

11. Zusammensetzungen nach einem der Ansprüche 1 bis 10, worin der Polymerisationsstarter (D), der in Mengen von 0,5 bis 3 Gew.% vorliegt, ausgewählt ist aus tert-Butylperbenzoat, tert-Amylperbenzoat, tert-Butylperacetat, Di-n-butyl-di-perphthalat und Mischungen davon; und
(a) Promotor (E) Kobalt(II)-2-ethylhexanoat in Mengen von 0,01 bis 0,15 Gew.% enthält; und Trimerisationskatalysator (F) 2-Hydroxypropyltrimethylammonium-2-ethylhexanoat in Mengen von 0,005 bis 0,05 Gew.% und 2,4,6-Tris(dimethylaminomethyl)phenol in Mengen von 0,1 bis 0,8 Gew.% enthält; oder
(b) Promotor (E) Kobalt(II)-neodecanoat in Mengen von 0,02 bis 0,2 Gew.% enthält und Trimerisationskatalysator (F) 0,05 bis 0,4 Gew.% 2-Hydroxypropyltrimethylammonium-2-ethylhexanoat und 0,1 bis 0,8 Gew.% 2,4,6-Tris(dimethylaminomethyl)-phenol enthält; oder
(c) Promotor (E) Kobalt(II)-2-ethylhexanoat und/oder Kobalt(II)-neodecanoat in Mengen von 0,01 bis 0,2 Gew.% enthält und der Trimerisationskatalysator (F) zusammengesetzt ist aus einer Mischung, enthaltend 0,05 bis 0,4 Gew.% 2-Hydroxypropyltrimethylammonium-2-ethylhexanoat, 0,1 bis 0,8 Gew.% 2,4,6-Tris(dimethylaminomethyl)-phenol und 0,1 bis 1,0 Gew.% einer 50%igen Lösung von Natrium-N-(2-hydroxy-5-nonylphenyl)methyl-N-methylglycinat in Diethylenglycol; oder
(d) Promotor (E) Kobalt(II)-2-ethylhexanoat und/oder Kobalt(II) basisches Neodecanoat in Mengen von 0,01 bis 0,2 Gew.% enthält; und der Trimerisationskatalysator (F) zusammengesetzt ist aus 0,1 bis 0,8 Gew.% 2,4,6-Tris(dimethylaminomethyl)phenol und 0,1 bis 1,0 Gew.% einer Mischung, enthaltend Natrium-N-(2-hydroxy-5-nonylphenyl)methyl-N-methylglycinat, Kaliumacetat, ethoxyliertes Cocoamin und Diethylenglycol.

12. Zusammensetzungen nach einem der Ansprüche 1 bis 11, worin der mineralische Füllstoff (G) ein Zeolitpulver oder -paste enthält, insbesondere in einer Menge von 2 bis 5 Gew.%, bezogen auf die anorganische Komponente.

13. Verfahren zur Herstellung der Zusammensetzungen nach Anspruch 1, welche die Zugabe einer Mischung der Komponenten (B), (C), (E), (F) und wahlweise (G) zu einer Mischung der Komponenten (A), (D) und wahlweise (G) umfaßt.

14. Hitzehärtbare Materialien, hergestellt durch Vernetzung der Zusammensetzungen nach einem der Ansprüche 1 bis 12.

15. Verwendung der Zusammensetzungen nach einem der Ansprüche 1 bis 12 bei der Herstellung von Verbundmaterialien, die organische und/oder anorganische Fasern enthalten.

16. Verwendung der Zusammensetzungen nach einem der Ansprüche 1 bis 12 bei der Herstellung von Verbundmaterialien mittels "lay-up", Pultrusion, Filamentaufwicklung oder RTM-Verfahren.

## Patentansprüche (Patentansprüche für folgende(n) Vertragsstaat(en): ES)

1. Verfahren zur Herstellung vernetzbarer polymerer Zusammensetzungen, umfassend:
(A) mindestens ein Polyisocyanat mit einer Funktionalität von 2 bis 5 und einer Viskosität bei 25°C von 20 bis 10000 cP;
(B) mindestens ein Polyol mit einer Funktionalität von 2 bis 7 und einem mittleren Molekulargewicht von 200 bis 10000 in einer solchen Menge, daß das Molverhältnis (NCO/OH) der Isocyanatgruppen der Komponente (A) zu den Hydroxylgruppen im Bereich von 2 bis 8 liegt;
(C) mindestens ein Vinylesterharz und/oder ein ungesättigtes Polyesterharz, enthaltend eine ethylenisch ungesättigte Funktion vom Vinyl- oder Vinylidentyp in einer 30 bis 80 Gew.%-Mischung mit einem Vinyl- oder Divinylmonomer, in einer Menge von 20 bis 80 Gew.% der Summe (A) + (B) + (C);
(D) mindestens einen radikalischen Polymerisationsstarter, der bei Temperaturen unterhalb 70°C stabil ist, in einer Menge von 0,1 bis 4 Gew.%, bezogen auf das Gesamtgewicht von (A) + (B) + (C) ;
(E) mindestens einen Promotor für den Zerfall des Starters (D) bei Temperaturen unterhalb 70°C, ausgewählt aus Salzen von Übergangsmetallen, vorzugsweise CO(II) und MN(II), die in mindestens einer der Komponenten (A), (B) und (C) löslich sind, in einer Menge von 0,001 bis 0,5 Gew.%, berechnet als Metall des Gesamtgewichtes von (A) + (B) + (C), N,N-Dialkyl-substituierten aromatischen Aminen in einer Menge von 0,05 bis 1 Gew.% und Mischungen davon;
(F) mindestens einen Trimerisationskatalysator für Polyisocyanat (A) in einer Menge von 0,01 bis 1 Gew.%, bezogen auf das Gesamtgewicht von (A) + (B) + (C); und
(G) von 0 bis 20 Gew.%, bezogen auf das Gesamtgewicht von (A) + (B) + (C) eines mineralischen Füllstoffs, welcher eine dehydrierende Wirkung ausübt,
welches die Zugabe einer Mischung der Komponenten (B), (C), (E), (F) und wahlweise (G) zu einer Mischung der Komponenten (A), (D) und wahlweise (G) umfaßt.

2. Verfahren nach Anspruch 1, worin das Polyisocyanat (A) eine Funktionalität von 2 bis 4 und eine Viskosität von 40 bis 1000 cP bei 25°C hat; und/oder ausgewählt ist aus Polyisocyanaten der allgemeinen Formel: 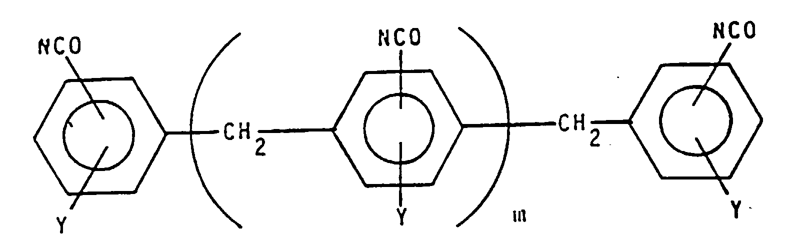 worin:
Y = H, Cl, Br, F oder CH₃; und
m = eine Zahl von 0 bis 3.

3. Verfahren nach einem der Ansprüche 1 und 2, worin das Polyol (B) eine Funktionalität von 2 bis 5 hat und/oder ein mittleres Molekulargewicht von 300 bis 5000 hat.

4. Verfahren nach einem der Ansprüche 1 bis 3, worin das Molverhältnis NCO/OH im Bereich von 3 bis 7 liegt.

5. Verfahren nach einem der Ansprüche 1 bis 4, worin das Polyol (B) eine Mischung eines Diols mit einem Polyol mit einer Funktionalität von größer als 2 enthält oder ein Polypropylenglycol oder ein Polyesterpolyol mit einem mittleren Molekulargewicht von 300 bis 4000 und einer Funktionalität von 2 bis 4 enthält.

6. Verfahren nach einem der Ansprüche 1 bis 5, worin der Starter (D) ausgewählt ist aus tert-Butyl und tert-Amylperbenzoaten und Peracetaten und Dibutylperphthalat.

7. Verfahren nach einem der Ansprüchen 1 bis 6, worin der Zerfallspromotor (E) ausgewählt ist aus Kobaltsalzen und N,N-Diethylanilin.

8. Verfahren nach einem der Ansprüche 1 bis 7, worin der Trimerisationskatalysator (F) ausgewählt ist aus aliphatischen oder araliphatischen tertiären Polyaminen, quaternären Ammoniumsalzen von Carbonsäuren, Carboxylaten von Metallen der Gruppen I und II und/oder Übergangsmetallen, die in der Mischung (A), (B) und (C) löslich sind, substituierten Glycinaten von Metallen der Gruppen I und II und Mischen davon.

9. Verfahren nach einem der Ansprüche 1 bis 8, worin die Zusammensetzungen eine Viskosität von 400 bis 3000 cP bei 20°C haben.

10. Verfahren nach einem der Ansprüche 1 bis 9, worin das Polyisocyanat (A) wahlweise ein Carbodiimidmodifiziertes polymeres MDI mit einer Funktionalität von 2 bis 3 enthält.

11. Verfahren nach einem der Ansprüche 1 bis 10, worin der Polymerisationsstarter (D), der in Mengen von 0,5 bis 3 Gew.% vorliegt, ausgewählt ist aus tert-Butylperbenzoat, tert-Amylperbenzoat, tert-Butylperacetat, Di-n-butyl-di-perphthalat und Mischungen davon; und
(a) Promotor (E) Kobalt(II)-2-ethylhexanoat in Mengen von 0,01 bis 0,15 Gew.% enthält; und Trimerisationskatalysator (F) 2-Hydroxypropyltrimethylammonium-2-ethylhexanoat in Mengen von 0,005 bis 0,05 Gew.% und 2,4,6-Tris-(Dimethylaminomethyl)phenol in Mengen von 0,1 bis 0,8 Gew.% enthält; oder
(b) Promotor (E) Kobalt(II)-neodecanoat in Mengen von 0,02 bis 0,2 Gew.% enthält und Trimerisationskatalysator (F) 0,05 bis 0,4 Gew.% 2-Hydroxypropyltrimethylammonium-2-ethylhexanoat und 0,1 bis 0,8 Gew.% 2,4,6-Tris(dimethylaminomethyl)phenol enthält; oder
(c) Promotor (E) Kobalt(II)-2-ethylhexanoat und/oder Kobalt(II)-neodecanoat in Mengen von 0,01 bis 0,2 Gew.% enthält und der Trimerisationskatalysator (F) zusammengesetzt ist aus einer Mischung, enthaltend 0,05 bis 0,4 Gew.% 2-Hydroxypropyltrimethylammonium-2-ethylhexanoat, 0,1 bis 0,8 Gew.% 2,4,6-Tris(dimethylaminomethyl)phenol und 0,1 bis 1,0 Gew.% einer 50%igen Lösung von Natrium-N-(2-hydroxy-5-nonylphenyl)methyl-N-methylglycinat in Diethylenglycol; oder
(d) Promotor (E) Kobalt(II)-2-ethylhexanoat und/oder Kobalt(II) basisches Neodecanoat in Mengen von 0,01 bis 0,2 Gew.% enthält; und der Trimerisationskatalysator (F) zusammengesetzt ist aus 0,1 bis 0,8 Gew.% 2,4,6-Tris(dimethylaminomethyl)phenol und 0,1 bis 1,0 Gew.% einer Mischung, enthaltend Natrium-N-(2-hydroxy-5-nonylphenyl)methyl-N-methylglycinat, Kaliumacetat, ethoxyliertes Cocoamin und Diethylenglycol.

12. Verfahren nach einem der Ansprüche 1 bis 11, worin der mineralische Füllstoff (G) ein Zeolitpulver oder -paste enthält, insbesondere in einer Menge von 2 bis 5 Gew.%, bezogen auf die anorganische Komponente.

13. Verfahren zur Herstellung eines wärmehärtbaren Materials, welches die Vernetzung von Zusammensetzungen, hergestellt nach dem Verfahren gemäß einem der Ansprüche 1 bis 12 umfaßt.

14. Verwendung von Zusammensetzungen nach einem der Ansprüche 1 bis 12 bei der Herstellung von Verbundmaterialien, die organische und/oder anorganische Fasern enthalten.

15. Verwendung der Zusammensetzungen nach einem der Ansprüche 1 bis 12 bei der Herstellung von Verbundmaterialien mittels "lay-up", Pultrusion, Filamentaufwicklung oder RTM-Verfahren.

## Revendications (Revendications pour l'(les) Etat(s) contractant(s) suivant(s): BE, DE, FR, GB, NL, SE)

1. Compositions polymères réticulables comprenant :
(A) au moins un polyisocyanate ayant une fonctionnalité de 2 à 5 et une viscosité à 25°C de 20 à 10 000 cP ;
(B) au moins un polyol ayant une fonctionnalité de 2 à 7 et un poids moléculaire moyen de 200 à 10 000, en une quantité telle que le rapport molaire (NCO/OH) des groupes isocyanates du composant (A) aux groupes hydroxyles est de 2 à 8 ;
(C) au moins une résine vinylester et/ou une résine polyester insaturée, contenant une insaturation éthylénique du type vinyle ou vinylidène, en mélange à 30-80% en poids avec un monomère vinyle ou divinyle, en une quantité de 20 à 80 % en poids par rapport à la somme (A) + (B) + (C) ;
(D) au moins un initiateur de polymérisation radicalaire stable en tant que tel aux températures inférieures à 70°C en une quantité allant de 0,1 à 4 % en poids par rapport au poids total de (A) + (B) + (C) ;
(E) au moins un promoteur pour la décomposition de l'initiateur (D) aux températures inférieures à 70°C, choisi parmi les sels de métaux de transition, de préférence Co(II) et Mn(II), qui sont solubles dans au moins l'un des composants (A), (B) et (C), en une quantité allant de 0,001 à 0,5 % en poids calculé par rapport au métal, par rapport au poids total de (A) + (B) + (C), les N,N-dialkylamines aromatiques en une quantité allant de 0,05 à 1 % en poids et leurs mélanges ;
(F) au moins un catalyseur de trimérisation du polyisocyanate (A), en une quantité allant de 0,01 à 1 % en poids par rapport au poids total de (A) + (B) + (C) ;
(G) de 0 % à 20 % en poids par rapport au poids total de (A) + (B) + (C) d'une charge minérale agissant comme déshydratant.

2. Compositions selon la revendication 1, dans lesquelles le polyisocyanate (A) a une fonctionnalité de 2 à 4 et une viscosité de 40 à 1 000 cP à 25°C ; et/ou est choisi parmi les polyisocyanates de formule générale : 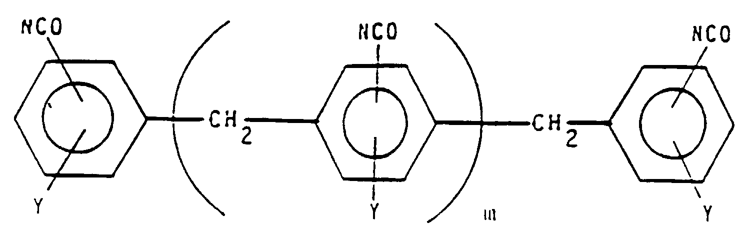 dans laquelle :
Y = H, Cl, Br, F ou CH₃ ; et
m = un nombre de 0 à 3.

3. Compositions selon l'une quelconque des revendications 1 ou 2, dans lesquelles le polyol (B) a une fonctionnalité de 2 à 5 et/ou un poids moléculaire moyen de 300 à 5 000.

4. Compositions selon l'une quelconque des revendications 1 à 3, dans lesquelles le rapport molaire NCO/OH va de 3 à 7.

5. Compositions selon l'une quelconque des revendications 1 à 4, dans lesquelles le polyol (B) contient un mélange d'un diol avec un polyol ayant une fonctionnalité supérieure à 2, ou contient un polypropylène glycol ou un polyester polyol ayant un poids moléculaire moyen allant de 300 à 4 000 et une fonctionnalité allant de 2 à 4.

6. Compositions selon l'une quelconque des revendications 1 à 5, dans lesquelles l'initiateur (D) est choisi parmi les perbenzoates et les peracétates de tert-butyle et de tert-amyle et le perphtalate de dibutyle.

7. Compositions selon l'une quelconque des revendications 1 à 6, dans lesquelles le promoteur de décomposition (E) est choisi parmi les sels de cobalt et la N,N-diéthylaniline.

8. Compositions selon l'une quelconque des revendications 1 à 7, dans lesquelles le catalyseur de trimérisation (F) est choisi parmi les polyamines tertiaires aliphatiques ou araliphatiques, les sels d'ammonium quaternaire d'acides carboxyliques, les carboxylates de métaux des groupes I et II ou/ou de métaux de transition qui sont solubles dans le mélange de (A), (B) et (C), les glycinates substitués de métaux des groupes I et II et leurs mélanges.

9. Compositions selon l'une quelconque des revendications 1 à 8, qui présentent une viscosité de 400 à 3 000 cP à 20°C.

10. Compositions selon l'une quelconque des revendications 1 à 9, dans lesquelles le polyisocyanate (A) comprend éventuellement un polymère MDI modifié par un carbodiimide ayant une fonctionnalité de 2 à 3.

11. Compositions selon l'une quelconque des revendications 1 à 10, dans lesquelles l'initiateur de polymérisation (D), présent en une quantité allant de 0,5 à 3 % en poids, est choisi parmi le perbenzoate de tert-butyle, le perbenzoate de tert-amyle, le peracétate de tert-butyle, le diperphtalate de di-n-butyle et leurs mélanges, et
(a) le promoteur (E) comprend de 0,01 à 0,15 % en poids de 2-éthylhexanoate de cobalt (II) ; et le catalyseur de trimérisation (F) comprend de 0,005 % à 0,05 % en poids de 2-éthylhexanoate de 2-hydroxypropyl triméthylammonium et de 0,1 à 0,8 % en poids de 2,4,6-tris-(diméthylaminométhyl)phénol ; ou
(b) le promoteur (E) comprend de 0,02 à 0,2 % en poids de néodécanoate de cobalt(II) ; et le catalyseur de trimérisation (F) comprend de 0,05 à 0,4 % en poids de 2-éthylhexanoate de 2-hydroxypropyl triméthylammonium et de 0,1 à 0,8 % en poids de 2,4,6-tris(diméthylaminométhyl)phénol ; ou
(c) le promoteur (E) comprend de 0,01 à 0,2 % en poids de 2-éthylhexanoate de cobalt(II) et/ou de néodécanoate de cobalt(II) ; et le catalyseur de trimérisation (F) est constitué par un mélange comprenant de 0,05 à 0,4 % en poids de 2-éthylhexanoate de 2-hydroxypropyl triméthylammonium, de 0,1 à 0,8 % en poids de 2,4,6-tris-(diméthylaminométhyl)phénol et de 0,1 à 1,0 % en poids d'un solution à 50 % de N-(2-hydroxy-5-nonylphényl)méthyl-N-méthylglycinate de sodium dans l'éthylène glycol ; ou
(d) le promoteur (E) comprend de 0,01 à 0,2 % en poids de 2-éthylhexanoate de cobalt(II) et/ou de néodécanoate basique de cobalt(II) ; et le catalyseur de trimérisation (F) est constitué par 0,1 à 0,8 % en poids de 2,4,6-tris-(diméthylaminométhyl)phénol et par 0,1 à 1,0 % en poids d'un mélange comprenant du N-(2-hydroxy-5-nonylphényl)méthyl-N-méthylclycinate de sodium, de l'acétate de potassium, de la cocoamine éthoxylée et du diéthylène glycol.

12. Compositions selon l'une quelconque des revendications 1 à 11, dans lesquelles la charge minérale (G) contient une poudre ou une pâte de zéolithe, en particulier en une quantité de 2 à 5 % en poids par rapport au composant minéral.

13. Procédé pour la préparation des compositions selon la revendication 1, comprenant l'addition d'un mélange des composants (B), (C), (E), (F) et éventuellement (G) à un mélange des constituants (A), (D) et éventuellement (G).

14. Matériaux thermodurcissables, préparés en soumettant les compositions selon l'une quelconque des revendications 1 à 12 à une réticulation.

15. Utilisation des compositions selon l'une quelconque des revendications 1 à 12 pour l'élaboration de matériaux composites contenant des fibres organiques et/ou minérales.

16. Utilisation des compositions selon l'une quelconque des revendications 1 à 12 pour l'élaboration de matériaux composites par drapage, pultrusion, enroulement filamentaire, ou par des procédés de moulage par transfert de résine.

## Revendications (Revendications pour l'(les) Etat(s) contractant(s) suivant(s): ES)

1. Procédé pour la préparation de compositions polymères réticulables comprenant :
(A) au moins un polyisocyanate ayant une fonctionnalité de 2 à 5 et une viscosité à 25°C de 20 à 10 000 cP ;
(B) au moins un polyol ayant une fonctionnalité de 2 à 7 et un poids moléculaire moyen de 200 à 10 000, en une quantité telle que le rapport molaire (NCO/OH) des groupes isocyanates du composant (A) aux groupes hydroxyles est de 2 à 8 ;
(C) au moins une résine vinylester et/ou une résine polyester insaturée, contenant une insaturation éthylénique du type vinyle ou vinylidène, en mélange à 30-80% en poids avec un monomère vinyle ou divinyle, en une quantité allant de 20 à 80 % en poids par rapport à la somme (A) + (B) + (C) ;
(D) au moins un initiateur de polymérisation radicalaire stable en tant que tel aux températures inférieures à 70°C en une quantité allant de 0,1 à 4 % en poids par rapport au poids total de (A) + (B) + (C) ;
(E) au moins un promoteur pour la décomposition de l'initiateur (D) aux températures inférieures à 70°C, choisi parmi les sels de métaux de transition, de préférence Co(II) et Mn(II), qui sont solubles dans au moins l'un des composants (A), (B) et (C), en une quantité allant de 0,001 à 0,5 % en poids calculé par rapport au métal, par rapport au poids total de (A) + (B) + (C), les N,N-dialkylamines aromatiques en une quantité allant de 0,05 à 1 % en poids et leurs mélanges ;
(F) au moins un catalyseur de trimérisation du polyisocyanate (A), en une quantité allant de 0,01 à 1 % en poids par rapport au poids total de (A) + (B) + (C) ;
(G) de 0 % à 20 % en poids par rapport au poids total de (A) + (B) + (C) d'une charge minérale agissant comme déshydratant,
qui comprend l'addition d'un mélange des composants (B), (C), (E), (F) et éventuellement (G) à un mélange des constituants (A), (D) et éventuellement (G).

2. Procédé selon la revendication 1, dans lequel le polyisocyanate (A) a une fonctionnalité de 2 à 4 et une viscosité de 40 à 1 000 cP à 25°C ; et/ou est choisi parmi les polyisocyanates de formule générale : 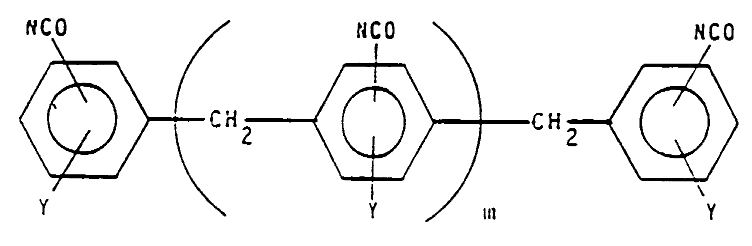 dans laquelle :
Y = H, Cl, Br, F ou CH₃ ; et
m = un nombre de 0 à 3.

3. Procédé selon l'une quelconque des revendications 1 ou 2, dans lequel le polyol (B) a une fonctionnalité de 2 à 5 et/ou un poids moléculaire moyen de 300 à 5 000.

4. Procédé selon l'une quelconque des revendications 1 à 3, dans lequel le rapport molaire NCO/OH va de 3 à 7.

5. Procédé selon l'une quelconque des revendications 1 à 4, dans lequel le polyol (B) contient un mélange d'un diol avec un polyol ayant une fonctionnalité supérieure à 2, ou contient un polypropylène glycol ou un polyester polyol ayant un poids moléculaire moyen allant de 300 à 4 000 et une fonctionnalité allant de 2 à 4.

6. Procédé selon l'une quelconque des revendications 1 à 5, dans lequel l'initiateur (D) est choisi parmi les perbenzoates et les peracétates de tert-butyle et de tert-amyle et le perphtalate de dibutyle.

7. Procédé selon l'une quelconque des revendications 1 à 6, dans lequel le promoteur de décomposition (E) est choisi parmi les sels de cobalt et la N,N-diéthylaniline.

8. Procédé selon l'une quelconque des revendications 1 à 7, dans lequel le catalyseur de trimérisation (F) est choisi parmi les polyamines tertiaires aliphatiques ou araliphatiques, les sels d'ammonium quaternaire d'acides carboxyliques, les carboxylates de métaux des groupes I et II ou/ou de métaux de transition qui sont solubles dans le mélange de (A), (B) et (C), les glycinates substitués de métaux des groupes I et II et leurs mélanges.

9. Procédé selon l'une quelconque des revendications 1 à 8, dans lequel les compositions présentent une viscosité de 400 à 3 000 cP à 20°C.

10. Procédé selon l'une quelconque des revendications 1 à 9, dans lequel le polyisocyanate (A) comprend éventuellement un polymère MDI modifié par un carbodiimide ayant une fonctionnalité de 2 à 3.

11. Procédé selon l'une quelconque des revendications 1 à 10, dans lequel l'initiateur de polymérisation (D), présent en une quantité allant de 0,5 à 3 % en poids, est choisi parmi le perbenzoate de tert-butyle, le perbenzoate de tert-amyle, le peracétate de tert-butyle, le diperphtalate de di-n-butyle et leurs mélanges, et
(a) le promoteur (E) comprend de 0,01 à 0,15 % en poids de 2-éthylhexanoate de cobalt (II) ; et le catalyseur de trimérisation (F) comprend de 0,005 % à 0,05 % en poids de 2-éthylhexanoate de 2-hydroxypropyl triméthylammonium et de 0,1 à 0,8 % en poids de 2,4,6-tris-(diméthylaminométhyl)phénol ; ou
(b) le promoteur (E) comprend de 0,02 à 0,2 % en poids de néodécanoate de cobalt(II) ; et le catalyseur de trimérisation (F) comprend de 0,05 à 0,4 % en poids de 2-éthylhexanoate de 2-hydroxypropyl triméthylammonium et de 0,1 à 0,8 % en poids de 2,4,6-tris(diméthylaminométhyl)phénol ; ou
(c) le promoteur (E) comprend de 0,01 à 0,2 % en poids de 2-éthylhexanoate de cobalt(II) et/ou de néodécanoate de cobalt(II) ; et le catalyseur de trimérisation (F) est constitué par un mélange comprenant de 0,05 à 0,4 % en poids de 2-éthylhexanoate de 2-hydroxypropyl triméthylammonium, de 0,1 à 0,8 % en poids de 2,4,6-tris-(diméthylaminométhyl)phénol et de 0,1 à 1,0 % en poids d'un solution à 50 % de N-(2-hydroxy-5-nonylphényl)méthyl-N-méthylglycinate de sodium dans l'éthylène glycol ; ou
(d) le promoteur (E) comprend de 0,01 à 0,2 % en poids de 2-éthylhexanoate de cobalt(II) et/ou de néodécanoate basique de cobalt(II) ; et le catalyseur de trimérisation (F) est constitué par 0,1 à 0,8 % en poids de 2,4,6-tris-(diméthylaminométhyl)phénol et par 0,1 à 1,0 % en poids d'un mélange comprenant du N-(2-hydroxy-5-nonylphényl)méthyl-N-méthylclycinate de sodium, de l'acétate de potassium, de la cocoamine éthoxylée et du diéthylène glycol.

12. Procédé selon l'une quelconque des revendications 1 à 11, dans lequel la charge minérale (G) contient une poudre ou une pâte de zéolithe, en particulier en une quantité de 2 à 5 % en poids par rapport au composant minéral.

13. Procédé pour la préparation de matériaux thermodurcissables, dans lequel les compositions préparées par un procédé selon l'une quelconque des revendications 1 à 12 sont soumises à une réticulation.

14. Utilisation des compositions selon l'une quelconque des revendications 1 à 12 pour l'élaboration de matériaux composites contenant des fibres organiques et/ou minérales.

15. Utilisation des compositions selon l'une quelconque des revendications 1 à 12 pour l'élaboration de matériaux composites par drapage, pultrusion, enroulement filamentaire, ou par des procédés de moulage par transfert de résine.
